# FASCICULE DE BREVET EUROPEEN

(11) **EP 0 806 284 B1**
(45) Date de publication et mention de la délivrance du brevet: **23.01.2002**
(21) Numéro de dépôt: 97401005.0
(22) Date de dépôt: 05.05.1997
(51) Int. Cl.: B29C 55/06

(54) **Film de suremballage, dispositif d'étirage préalable de film et procédé de suremballage**
Umverpackungsfilm, Vorrichtung zum Filmvorstrecken und Umverpackungsverfahren
Overwrapping film, film pre-stretching device and overwrapping method

(30) Priorité: 06.05.1996 FR 9605645; 20.06.1996 FR 9607708
(43) Date de publication de la demande: 12.11.1997
(73) Titulaire: ITW Mima Systems, 73100 Aix-les-Bains (FR)
(72) Inventeur: Martin-Cocher, Jean-Paul, 73290 LA Motte Servolex (FR); Jaconelli, Georges, 73100 Brison Saint-Innocent (FR)
(74) Mandataire: Hurwic, Aleksander

(56) Documents cités:
- EP-A- 0 531 021
- WO-A-89/06594
- WO-A-94/04419
- FR-A- 2 281 275
- GB-A- 2 083 002

## Description

La présente invention se rapporte à un film de suremballage selon la première partie de la revendication 1, à une bobine de film, à une machine d'étirage de film selon la première partie de la revendicution 5 et à un procédé de suremballage d'un film étiré autour d'une charge, selon la première partie de la revendication 8. L'étirage préalable comporte avantageusement une étape de déroulement du film à partir d'une bobine d'alimentation, une étape d'étirage et une étape de bobinage du film étiré sur un mandrin ou une bobine de réception, dans l'attente de son utilisation ultérieure.

Une technique de banderolage hélicoïdal réservée aujourd'hui aux machines simples à faible cadence assurait l'étirage d'un film directement sur une charge palettisée formant un parallélépipède rectangle. Le film était disposé sur une bobine d'axe vertical équipée d'un frein. On fixait tout d'abord une extrémité du film sur la charge que l'on faisait ensuite tourner autour d'un axe vertical. Le freinage de la bobine assurait l'étirement du film à la valeur désirée.

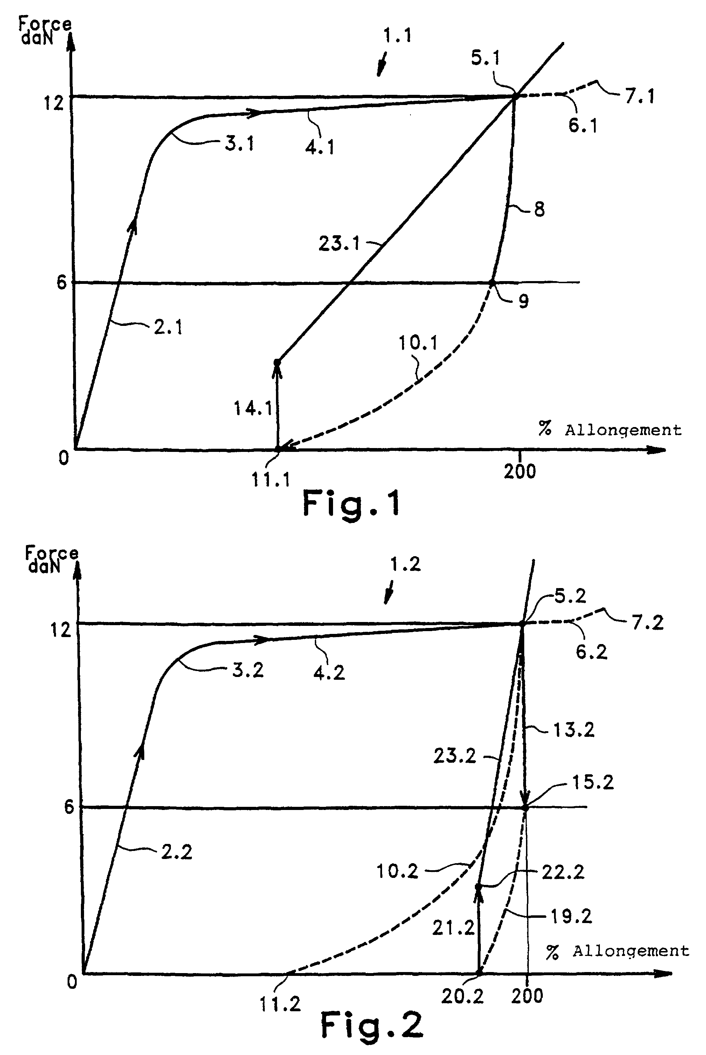

Malheureusement, la charge n'étant pas cylindrique, mais formant généralement un parallélépipède rectangle, la distance radiale à recouvrir avec le film varie avec l'angle, et une rotation à vitesse angulaire constante de la charge associée à une force de freinage constante n'assurent pas un allongement uniforme du film. De plus, le film étirable subit immédiatement après son étirage une relaxation qui conduit, lors d'une période sensiblement égale à 48 heures, à un relâchement de la force de rappel élastique sensiblement égal à 50 %. Ainsi, avec ce type de machine, on était limité à des forces d'étirement susceptibles d'être supportées par la charge avec des forces de rappel élastiques, assurant la cohésion de la charge lors des manutentions et du transport, sensiblement moindre. L'on a donc été conduit à abandonner ce type de machine au profit de machines de banderolage comportant un dispositif de préétirage comprenant une pluralité de rouleaux motorisés entraînés à des vitesses périphériques différentes. En sortie des rouleaux du dispositif de préétirage, le film était banderolé sans tension ou sous une tension mécanique faible de préférence sur la charge à suremballer, comme il sera expliqué en référence à la figure 1.

Dans la Demande de Brevet N° 92 10254 (publiée sous le N° FR 2 695 102), la Demanderesse a décrit un procédé de suremballage d'une charge avec un film étiré au préalable, la dépose du film n'intervenant qu'après un délai de relaxation sous tension mécanique du film. Cette Demande de Brevet indique, comme il sera expliqué en référence à la figure 2, que l'on peut ainsi obtenir un gain au niveau de l'allongement résiduel, après relaxation du film, ce qui permet d'en réduire la consommation.

Dans la Demande de Brevet N° 92 10254 (publiée sous le N° FR 2 695 102), la Demanderesse a décrit la façon optimale d'utiliser un film étiré au préalable avec relaxation sous tension mécanique importante.

Toutefois, les films relaxés sous tension mécanique importante ne sont pas adaptés à la réalisation de tout type de suremballage. D'une part, ils exercent une force de constriction importante sur la bobine de film, force pouvant, dans certains cas, aller jusqu'à la destruction d'une telle bobine. Ainsi, on est obligé de mettre en oeuvre des bobines présentant une grande résistance à la compression, par exemple en acier. Ces bobines présentent un prix de revient important et, dans la plupart des cas, doivent être réutilisées. Le retour des bobines vides induit un coût non négligeable. D'autre part, le film posé autour d'une charge exerce sur cette dernière, grâce à sa mémoire élastique, une force de constriction dont l'intensité est sensiblement égale à la moitié de la valeur de la tension mécanique sous laquelle le film s'est relaxé. Ainsi, certaines charges sont trop fragiles ou trop compressibles pour pouvoir supporter les forces de constriction exercées par un film relaxé sous tension mécanique importante. De plus, les films relaxés sous tension mécanique importante sont assez rigides, peu élastiques et souvent fragiles. Ce type de film présente dans certains cas un risque important de perforation, notamment au niveau des coins de la palette.

WO 89/06594 décrit un dispositif de production de films minces exploitant au mieux les capacités de production d'une extrudeuse. On extrude tout d'abord un film relativement épais dont l'étirage permet d'augmenter la surface.

Dans ce document, on recherche à relâcher au maximum la force dans le film avant relaxation pour bobiner le film autour d'une charge avec la force la plus faible possible.

Les documents GB 2 083 002 et FR 2 281 275 décrivent également des procédés et dispositif d'emballage de charges au moyen d'un film de matière plastique étirable dans lequel le film ne présente pas des caractéristiques d'étirage et de relaxation avantageuses avant son enroulement autour de la charge à emballer.

Les documents EP-A- 0 531 021 et WO-A-94/04419 décrivent des procédés et dispositifs comprenant un étirage et une relaxation d'un film étirable.

C'est par conséquent un but de la présente invention d'offrir un film de suremballage exerçant une force de constriction contrôlée sur sa bobine de stockage.

C'est également un but de la présente invention d'offrir un film de suremballage susceptible d'exercer une force modérée sur la charge suremballée.

C'est aussi un but de la présente invention d'offrir un film de suremballage présentant de bonnes propriétés mécaniques, notamment un film élastique, résistant aux frottements et à la perforation.

C'est aussi un but de la présente invention d'offrir un film de suremballage susceptible d'être déposé autour d'une charge avec une tension mécanique inférieure à la tension qu'il va exercer ultérieurement sur la charge pour en assurer la cohésion.

C'est également un but de la présente invention d'offrir un film adapté aux caractéristiques mécaniques des produits formant la charge à suremballer.

Ces buts sont atteints selon la présente invention par un film décrit dans la revendication 1, par une bobine décrite dans la revendication 3 et dans la revendicaton 4, par une machine d'étirage de film décrit dans la revendication 5 et par un procédé de suremballage d'un film décrit dans la revendication 8.

Les revendications dépendantes décrivent des modifications avantageuses de l'invention.

Dans une première variante de mise en oeuvre du procédé de fabrication de film selon la présente invention, on relâche la tension mécanique dans le film juste après l'étape d'étirage. Dès qu'il a atteint l'allongement désiré, le film relâché est bobiné sous tension modérée sur une bobine de stockage sur laquelle il va se relaxer. Dans une deuxième variante de mise en oeuvre du procédé de fabrication d'un film selon la présente invention, le film est maintenu sous tension mécanique pendant un court instant avant le relâchement de la tension mécanique dans le film et son bobinage sur une bobine. Par exemple, on fait suivre au film étiré et maintenu sous tension mécanique un trajet entre des rouleaux de renvoi de manière à retarder le relâchement du film après son étirage. Selon la force de constriction exercée, le film est bobiné sur un mandrin en carton, en matière plastique, en acier ou autre.

A cet effet, l'invention propose un film de suremballage ayant subi un étirage sous une tension comprise entre 10 et 20 N/mm² par mètre de laize, un bobinage et une relaxation sur un mandrin ou une bobine de réception sous une tension mécanique comprise entre 10 et 90 % de la tension d'étirage, ledit film ayant subi, après l'opération d'étirage et avant le relâchement, une relaxation partielle à la tension d'étirage pendant une durée comprise entre 0,1 et 10 secondes.

L'invention a également pour objet un film, caractérisé en ce qu'il a subi un bobinage et une relaxation sous une tension mécanique comprise entre 10 et 50 % de la tension d'étirage.

L'invention a également pour objet une bobine de film, caractérisée en ce qu'elle comporte enroulée sur un moyeu carton un film selon l'invention.

L'invention a également pour objet une bobine de film, caractérisée en ce qu'elle comporte enroulée sur un moyeu en matières plastiques un film selon l'invention.

L'invention a également pour objet une machine d'étirage de film comportant des moyens d'étirage d'un film étirable, des moyens de guidage de film et des moyens de bobinage de film étiré sur une bobine de stockage, ladite machine comportant des moyens de guidage permettant une relaxation partielle à la tension d'étirage d'une durée comprise entre 0,1 et 10 secondes, suivis par des moyens pour ralâcher partiellement la tension mécanique dans le film après l'étirage et la relaxation partielle à la tension d'étirage et avant son bobinage sur la bobine de stockage.

L'invention a également pour objet une machine, caractérisée en ce que les moyens d'étirage et les moyens pour relâcher partiellement la tension mécanique comportent des rouleaux motorisés et en ce que la variation des vitesses périphériques des rouleaux de sortie des moyens d'étirage par rapport à celle du rouleau des moyens pour relâcher partiellement la tension mécanique dans le film est compris entre 10 et 90 %, de préférence entre 10 % et 50 %.

L'invention a également pour objet une machine, caractérisée en ce que les moyens d'étirage et les moyens pour relâcher partiellement la tension mécanique comportent des rouleaux motorisés et en ce que la variation des vitesses périphériques des rouleaux de sortie des moyens d'étirage par rapport à celle du rouleau des moyens pour relâcher partiellement la tension mécanique dans le film est compris entre 10 et 50 %, de préférence entre 10 % et 30 %.

L'invention a également pour objet une machine, caractérisée en ce qu'elle comporte des moyens pour faire varier le rapport des vitesses périphériques des rouleaux de sortie des moyens d'étirage par rapport à celle du rouleau des moyens pour relâcher partiellement la tension mécanique dans le film.

L'invention a également pour objet un procédé de suremballage d'un film étiré autour d'une charge, notamment palettisée, ledit procédé comprenant les étapes suivantes :
a) étirer le film sous une tension comprise entre 10 et 20 N/mm² par mètre de laize,
b) guider le film,
c) bobiner et relaxer le film sur un mandrin ou une bobine de réception sous une tension mécanique comprise entre 10 et 90 % de la tension d'étirage, procédé dans lequel, avant son bobinage et après son étirage, le film subit une relaxation partielle à la tension d'étirage d'une durée comprise entre 0,1 et 10 secondes.

L'invention a également pour objet un procédé, caractérisé en ce que le film est déposé sur la charge sous une tension inférieure à la moitié de la tension d'étirage du film.

L'invention sera mieux comprise au moyen de la description ci-après et des figures annexées données comme des exemples non limitatifs et sur lesquels :
- la figure 1 est une courbe explicative d'un comportement d'un film étiré simultanément avec la dépose sur une charge (art antérieur) ;
- la figure 2 est une courbe explicative du comportement d'un film étiré avec relaxation sous tension mécanique importante (art antérieur) ;
- la figure 3 est une courbe explicative du comportement d'un film selon l'invention ayant subi un étirement sous tension mécanique, un relâchement modéré de la tension mécanique, un bobinage et une relaxation sous cette tension mécanique modérée ;
- la figure 4 est une courbe explicative du comportement d'un film selon l'invention ayant subi un étirement sous tension mécanique, un relâchement de la tension mécanique plus important que celui de la figure 3 et une relaxation avec reprise de force, par exemple sur une bobine à une tension mécanique plus faible que celle illustrée sur la figure 3 ;
- la figure 5 est une courbe explicative du comportement d'un film selon l'invention ayant subi un étirement sous tension mécanique, un relâchement plus faible de la tension mécanique que celui illustré sur la figure 3, un bobinage et une relaxation avec reprise de force, sous une tension mécanique plus forte que celle illustrée sur la figure 3 ;
- la figure 6 est une courbe explicative du comportement d'un film selon la présente invention ayant subi un étirement sous tension mécanique, une relaxation partielle sous tension mécanique d'étirage, un relâchement de la tension mécanique et une relaxation complète ou quasi complète avec reprise de force, sous tension mécanique faible ;
- la figure 7 est une vue schématique en plan du trajet du film dans un premier exemple de réalisation d'une machine de préétirage selon la présente invention ;
- la figure 8 est une vue schématique en plan du trajet du film dans un deuxième exemple de réalisation d'une machine de préétirage selon la présente invention.

Dans les exemples non limitatifs des figures 1 à 6, on a illustré le comportement d'un film d'une épaisseur de 20 µm, de 0,5 m de laize, en polyéthylène basse densité linéaire fabriqué sur filière plate ou tubulaire.

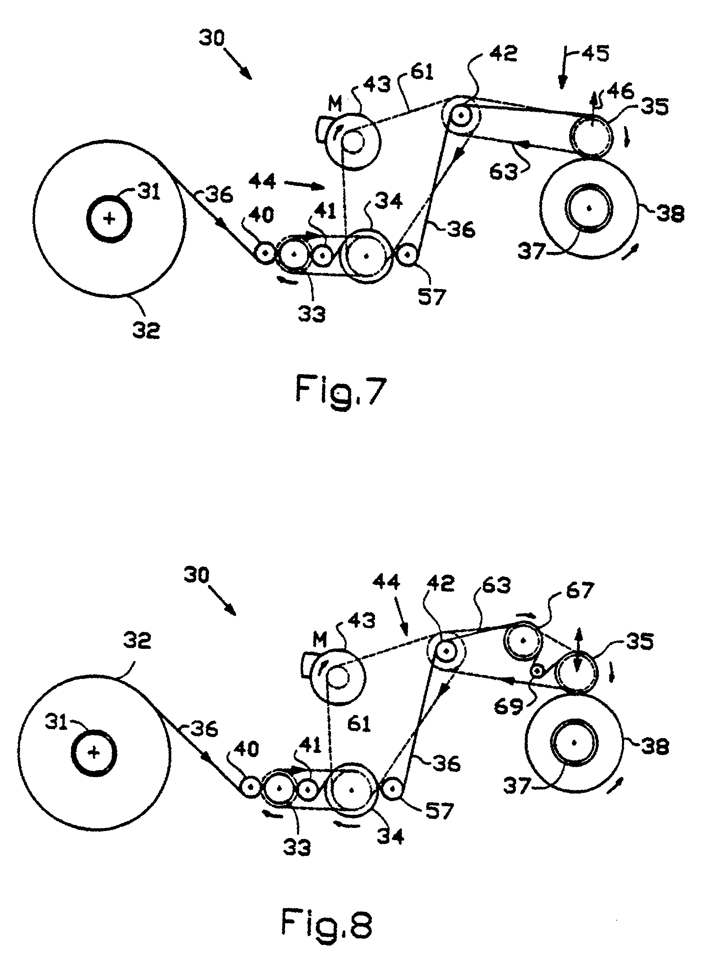

Sur les figures 7 et 8, on a utilisé les mêmes références pour désigner les mêmes éléments.

Les zones correspondantes des courbes des figures 1 à 6 sont désignées par les mêmes références suivies d'un point et du numéro de la figure.

Sur la figure 1, l'on peut voir l'évolution dans le temps de la courbe 1.1 exprimant la force de rappel exprimée en daN exercée par un film étirable en polyéthylène en fonction de son allongement exprimé en % lors d'un préétirage de type connu sensiblement simultané avec le banderolage d'une charge. L'allongement nul correspond au film avant étirement, alors qu'un allongement de 100 % correspond au doublement de la longueur du film. On évite les déchirures du film sur les arêtes vives de la charge et l'écrasement de la charge suremballée par un relâchement du film lors du suremballage, au prix d'une diminution de l'allongement et donc d'une augmentation de la consommation du film. Dans une machine de suremballage classique équipée des moyens de préétirage motorisé avec contrôle de la force de dépose, on diminue de préférence sensiblement de 50 % la tension mécanique dans le film en sortie des rouleaux de préétirage, cette tension mécanique réduite étant immédiatement appliquée à la charge lors du banderolage. Pratiquement toute la relaxation, s'effectuant dans les films banderolés autour de la charge avec une tension mécanique faible, est équivalente à la tension mécanique résiduelle après relaxation. Cette tension après relâchement et relaxation correspond sensiblement à la moitié de la tension mécanique nécessaire pour obtenir l'allongement optimal. Dans l'exemple illustré sur la figure 1, la courbe 1.1 simplifiée comporte tout d'abord une zone sensiblement linéaire 2.1 suivie d'une zone arrondie 3.1, correspondant à un seuil d'écoulement plastique puis s'approche de l'horizontale dans une zone 4.1 correspondant, par exemple, à un allongement compris entre 100 et 200 %, et à une traction de 12 daN. On arrête la traction au point 5.1 correspondant à 12 daN et à un allongement de 200 %. Un allongement supplémentaire illustré en pointillé en 6.1 conduirait à une rupture au point 7.1 correspondant sensiblement à un allongement de 500 % et à une force de 15 à 20 daN. Avec les machines classiques perfectionnées, on relâche le film en 8 avec un retour élastique du film correspondant à une diminution de la tension et de l'allongement jusqu'à ce qu'on atteigne le point 9 correspondant sensiblement à une force de 6 daN et à un allongement de 170 %. Le film préétiré est débité à une vitesse légèrement supérieure à celle du banderolage et la relaxation se produit, sous cette tension mécanique réduite de moitié, principalement dans la partie du film situé entre le dispositif de préétirage et la charge. Cette force de rappel réduite correspond à la force de rappel résiduelle après relaxation du film. Ainsi, l'on évite de soumettre la charge à suremballer à une force de traction supérieure à celle qui assurera réellement sa cohésion lors des manipulations ultérieures.

En 10.1, l'on a illustré en pointillé une relaxation qui se produirait dans le film si l'on relâchait totalement la tension mécanique. Dans un tel cas, l'allongement résiduel obtenu en 11.1 serait sensiblement égal à 120 %, c'est-à-dire que la longueur du film aurait été multipliée par un facteur égal à 2,2. La tension dans le film déposé autour de la charge remonte en 14.1 jusqu'à une valeur sensiblement égale à 3 daN.

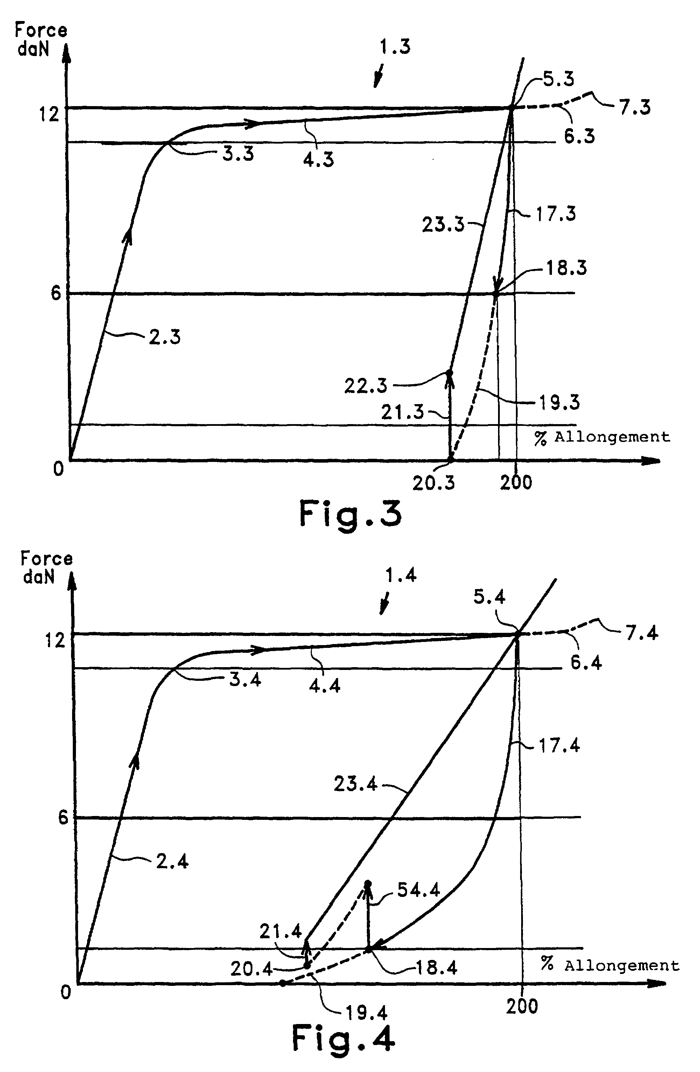

La courbe 1.2 de la figure 2, correspondant à un préétirage avec relaxation sous tension importante sur bobine, comporte des zones 2.2, 3.2, 4.2 et un point 5.2 équivalent aux zones 2.1, 3.1, 4.1 et au point 5.1 respectivement, de la figure 1. Ensuite, la relaxation, correspondant à une descente verticale de la courbe 13.2, est obtenue par exemple par le maintien sous tension du film préétiré sur un mandrin. La mise en oeuvre d'un film étirable courant en polyéthylène est extrêmement aisée dans la mesure où ce film est légèrement collant, ce qui évite de devoir prendre des précautions particulières lors de la manipulation. Après relaxation 13.2, l'on se trouve au point 15.2 correspondant à une force de rappel de 6 daN, moitié moindre à la force de préétirage, égale, dans l'exemple illustré, à 12 daN pour un allongement de 200 %, supérieur à l'allongement résiduel obtenu au point 9 de la figure 1 conduisant à une économie de film déjà décrite dans la Demande de Brevet N° 92 10254.

La courbe 1.3 de la figure 3, correspondant à un préétirage avec relaxation sous tension modérée sur bobine comporte des zones 2.3, 3.3, 4.3 et un point 5.3 équivalent aux zones 2.1, 3.1, 4.1 et au point 5.1 respectivement, de la figure 1. Ensuite, en 17.3, on relâche la tension mécanique avantageusement jusqu'au point 18.3 correspondant sensiblement à la moitié de la force de traction assurant l'allongement du film lors de l'étirage (6 daN dans l'exemple illustré). En 19.3, on a illustré en pointillé l'élasticité résiduelle qui se produirait dans le film si on relâchait totalement la tension mécanique au moment de la pose sur la charge. Dans un tel cas, l'allongement résiduel obtenu en 20.3 serait sensiblement égal à 175 %. Avantageusement, le film est appliqué sur une charge, par exemple, palettisée avec une tension mécanique inférieure ou égale à la tension à laquelle le film a été relâché (point 18.3) de manière à éviter un re-étirage. Dans l'exemple de réalisation, la pose du film autour de la charge s'effectue à une tension mécanique très faible, par exemple comprise entre 0,5 et 1 daN. Toutefois, il est bien entendu que la pose du film selon la présente invention sur une charge à suremballer sous une tension mécanique supérieure ne sort pas du cadre de la présente invention.

Pour un relâchement sensiblement égal à la moitié de la force d'étirage (tension mécanique sur bobine égale à la moitié de la force d'étirage), la tension dans le film et l'allongement du film ne varient pas au cours de la phase de relaxation qui est symbolisée par le point 18.3 sur la figure 3. Après relaxation d'au moins quelques dizaines de secondes (sachant qu'une relaxation complète nécessite plusieurs heures), on peut effectuer le suremballage d'une charge avantageusement palettisée avec le film selon l'invention. Dans l'exemple illustré sur la figure 3, le suremballage est effectué au point 20.3 avec une tension extrêmement faible, le relâchement de la tension provoque une contraction 19.3 du film qui perd une partie de l'allongement. Dans l'exemple illustré au point 20.3, à tension mécanique sensiblement nulle, les films gardent un allongement sensiblement égal à 175 %. Après la pose du film autour de la palette, le film reprend en 21.3 une force de cohésion importante atteignant en 22.3 sensiblement la moitié de la tension avec laquelle il a été bobiné avant relaxation (point 18.3) et donc au quart de la tension d'étirage (point 5.3). La ligne 23.3 sensiblement droite reliant le point 22.3 au point 5.3 correspond à la courbe de réaction du film notamment par les contraintes subies par la charge en cours de manutention ou du transport. Une courbe de réaction proche de la verticale diminue les déformations indésirables de la charge suremballée soumise à des sollicitations durant les manutentions et le transport (basculement, freinage, accélération, chocs, etc...).

Dans la plupart des cas, l'augmentation de la force de constriction exercée par le film selon la présente invention postérieurement à la dépose du film sur une charge présente de nombreux avantages. Tout d'abord, dans la mesure où la charge est capable de supporter une telle force, cette dernière assure sa cohésion lors des manutentions et des transports. De plus, elle permet d'augmenter la cadence machine, de mettre en oeuvre des machines de suremballage ayant une faible puissance ou même la dépose manuelle aisée du film sur la charge. De plus, la dépose sous une force faible ou très faible, par exemple comprise entre 0,1 et 2 daN minimise les risques de casser le film, notamment sur les angles vifs de la charge. Par contre, certaines charges, comme par exemple, des bouteilles plastiques vides, sont trop fragiles, ou du papier toilette, des rouleaux d'essuie-mains et autres produits ménagers à base de cellulose trop compressibles pour pouvoir supporter sans risque de dommage une force de constriction importante. Dans un tel cas, il est avantageux d'utiliser le film dont le comportement est illustré sur la figure 4 qui a subi une relaxation à une tension mécanique inférieure à celle du film dont le comportement est illustré sur la figure 3.

Sur la figure 4, on peut voir le comportement d'un film selon la présente invention dont la tension après étirement a été relâchée à 1,2 daN au point 18.4. Lors de la relaxation en 54.4, la tension remonte jusqu'à 3,5 daN. Après que le film ait été posé autour d'une charge en 20.4 sous une tension très faible, la tension exercée par le film sur la charge ne remonte après la pose en 21.4 jusqu'à une valeur sensiblement égale à 1,5 daN. Le relâchement de la tension lors de la pose provoque une reprise de longueur du film dont l'allongement résiduel est égal à 150 %. Ce type de force est compatible avec des charges faciles à suremballer. De plus, la courbe de réaction 23.4 a une pente plus faible que la courbe de réaction 23.3 de la figure 3, mais supérieure à celle de la courbe de réaction 23.1 de la figure 1.

Il est bien entendu que la présente invention n'est pas limitée à un relâchement de la tension du film après élongation dont la valeur est supérieure ou égale à la moitié de la valeur de la force d'étirement.

Dans l'exemple illustré sur la figure 5, le film est relâché à une tension sensiblement égale à 8 daN en 18.5. Lors de la relaxation en 24.5, l'allongement ne varie pas (le film est toujours enroulé sur une bobine) mais la tension chute. L'exemple de la figure 5 illustre un cas intermédiaire entre le film de type connu illustré sur la figure 2 et l'exemple avantageux de réalisation des figures 3 et 4.

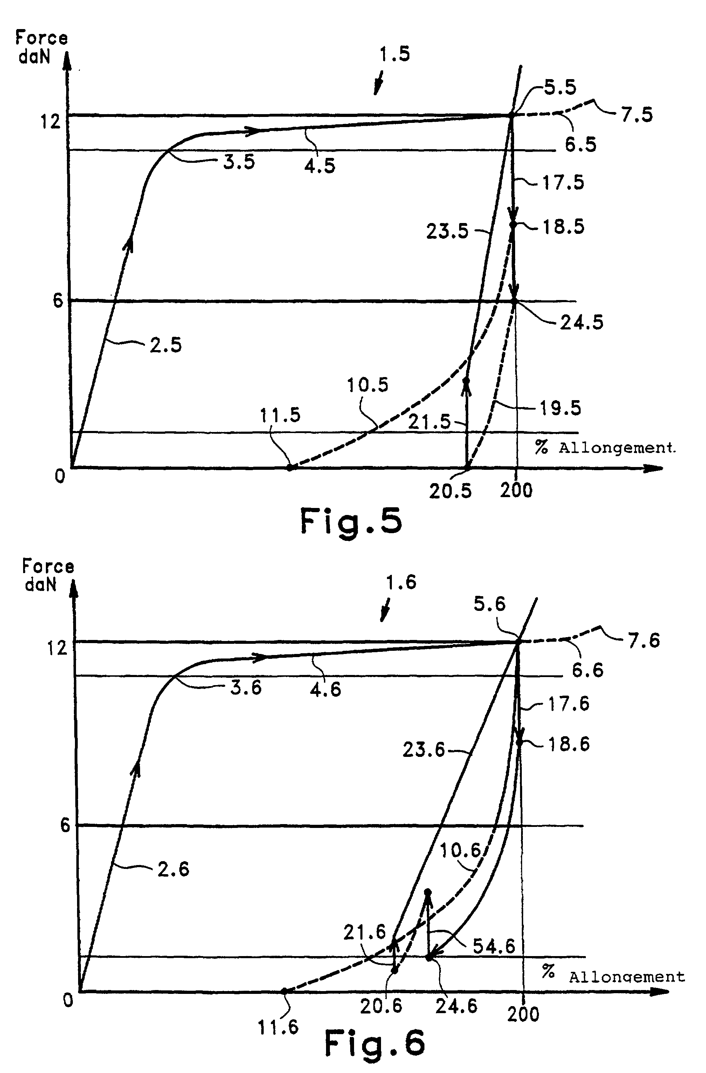

Sur la figure 6, on peut voir le comportement d'un film ayant subi une relaxation partielle 17.6 d'une fraction de seconde à quelques secondes sous la tension mécanique d'étirement, suivie en 18.6 par relâchement de la tension et une relaxation complète ou sensiblement complète sous une tension inférieure à la moitié de la valeur de la tension d'étirement. Lors de la relaxation en 54.6 à 1,2 daN, la tension remonte jusqu'à 3,5 daN. En 20.6, le film est posé autour d'une charge sous une tension très faible qui remonte ensuite en 21.6 à 1,5 daN par exemple.

L'exemple de réalisation de la figure 6 permet, grâce à une relaxation partielle préalable sous tension d'étirage, de limiter la contraction du film lors du relâchement de la tension et donc de faire une économie de film de l'ordre de 10 à 15 %. En effet, l'étirage résiduel en 21.6 (figure 6) est de 160 à 165 % au lieu de 150 % en 21.4 (figure 4).

Sur la figure 7, on peut voir l'exemple préféré de réalisation d'une machine 30 d'étirage préalable avec relaxation de film selon la présente invention. La machine 30 comporte des moyens 31 de réception d'une bobine 32 de film à étirer, une paire de rouleaux 33, 34 d'étirage de film, un rouleau 35 assurant le relâchement partiel de la tension dans le film 36, des moyens 37 de réception d'une bobine 38 de film étiré et relâché, des rouleaux de renvoi 40, 41, 57 et 42 et au moins un moteur 43. Avantageusement, le rouleau 35 entraîne la bobine de réception 38. Des moyens de transmission de mouvement 44 comportant des chaînes, des courroies crantées, des pignons et/ou une boîte de vitesse permettent l'entraînement des rouleaux 33, 34 et 35 par le moteur 43. Par exemple, les moyens de transmission 44 comportent une chaîne ou une courroie 61 entraînée par l'axe du moteur 43 et entraînant les axes des rouleaux 34 et 42. Une seconde courroie ou chaîne 63 relie l'axe du rouleau 42 à l'axe du rouleau 35. Des moyens symbolisés par la flèche 45 assurent l'application du rouleau 35 sur la bobine 38 du film étiré et relâché. Le rouleau 35 s'écarte de l'axe de la bobine 38 selon la flèche 46 au fur et à mesure que le diamètre de la bobine 38 augmente par suite d'enroulement du film sur la bobine. Avantageusement, les rouleaux 33, 34 et/ou 35 sont rainurés, moletés et/ou sont munis d'une surface présentant une bonne adhérence au film. Avantageusement, on ménage entre les rouleaux 34 et 35 un trajet de film ayant une longueur supérieure à 0,5 m, par exemple égale à 0,8 m, pour permettre le retour élastique transversal du film 36 avant bobinage, de manière à libérer les tensions transversales dans le film engendrées par la tension d'étirage longitudinal. On facilite ainsi le bobinage du film sur la bobine 38 et son débobinage ultérieur.

Nous allons maintenant expliquer le fonctionnement de la machine 30 selon la présente invention.

Tout d'abord, on détermine la force de constriction que l'on veut que le film 36 exerce sur les charges à suremballer et la résistance que le film doit présenter aux frottements et à la perforation en fonction des produits palettisés et du niveau de la sévérité des conditions de transport. On règle les moyens 44 de manière à obtenir les taux d'étirage et de relâchement avant bobinage du film. Le rapport d'étirage est déterminé par le rapport de la vitesse périphérique du rouleau 33 à la vitesse périphérique du rouleau 34. Le rapport de relâchement est déterminé par le rapport de la vitesse périphérique du rouleau 34 et celle du rouleau 35. Le réglage de ce rapport s'effectue par exemple par le choix des pignons mis en oeuvre par les moyens de transmission de mouvements 44. Toutefois, la mise en oeuvre d'autres moyens de réglage des rapports ainsi que d'une machine ayant un taux d'étirage et/ou de relâchement fixe ne sort pas du cadre de la présente invention.

On veut passer un film 36 issu de la bobine 32, successivement sur les rouleaux 40, 33, 41, 34, 42, et 35 pour l'amener sur la bobine 38. On met en marche le moteur 43 qui entraîne au moins les rouleaux 33, 34 et 35. Le film 35 est étiré entre les rouleaux 33 et 34. Entre les rouleaux 34 et 35, le film est relâché à la tension mécanique de relâchement puis est enroulé sur la bobine 38. Lorsqu'on a étiré et relâché la quantité de film désiré, on retire la bobine 38 des moyens de réception 37 que l'on remplace par un nouveau mandrin. Si nécessaire, on peut changer également la bobine de film 32 à étirer.

Une variante de réalisation d'une machine 30 selon la présente invention illustrée sur la figure 8 comporte en outre deux rouleaux supplémentaires 67, 69, dont la vitesse périphérique est égale à celle du rouleau 34, disposés entre le rouleau 42 et le rouleau 35, de manière à dérouler le film 36 sur une distance prédéterminée, par exemple comprise entre 0,5 et 4 m, de préférence comprise entre 0,6 et 2 m. Durant le temps de trajet, le film 36 subit une relaxation partielle sous tension mécanique d'etirage.

Avantageusement, on met en oeuvre un film en polyéthylène ayant une épaisseur comprise entre 10 et 35 µm, de préférence comprise entre 15 et 23 µm.

La vitesse du déroulement du film est avantageusement comprise entre 1 et 10 m/s, de préférence comprise entre 3 et 6 m/s.

L'allongement du film est avantageusement compris entre 50 et 500 %, de préférence comprise entre 200 et 300 %.

La tension d'étirement est avantageusement comprise entre 10 et 35 N/mm², de préférence comprise entre 10 et 20 N/mm².

La laize de film est comprise entre 0,2 et 2 m, de préférence comprise entre 0,2 m et 1 m.

Selon le type de film étiré au préalable désiré, on peut bien entendu mettre en oeuvre toutes les combinaisons de valeur précitées.

Dans le choix des valeurs, on doit tenir compte du fait que l'épaisseur, et par suite la résistance au frottement et à la perforation du film étiré au préalable diminuent avec l'allongement et que, pour un film donné, l'allongement obtenu dépend de la tension exercée

Voici quelques exemples de films selon l'invention ayant donné satisfaction:
- film pour suremballage de palettes de tonneaux de bierre sous pression (charge très résistante à la compression, masse importante) : laize de 0,5 m, film en polyéthylène ayant une épaisseur de 23 µm, un allongement de 300 %, sous une tension de 20 daN bobiné à une tension comprise entre 15 et 18 daN, tension après relaxation égale à 10 daN.
- film pour suremballage de palettes contenant des boîtes de conserve (charge peu fragile, bonne résistance à la compression, masse importante) : laize de 0,5 m, film en polyéthylène, ayant une épaisseur de 19 µm, un allongement de 250 %, sous une tension de 15 daN bobiné à 8 daN, tension après relaxation égale à 7,5 daN.
- film pour suremballage d'une palette de produits alimentaires sous emballage carton (moyennement fragiles, résistance moyenne à la compression, masse importante) : laize de 0,5 m, film en polyéthylène, ayant une épaisseur de 19 µm, un allongement de 250 %, sous une tension de 15 daN bobiné à 3 daN, tension après relaxation égale à 3,5 daN.
- film pour suremballage d'une palette de papier toilette (non fragile, faible résistance à la compression, masse faible) : laize de 0,5 m, film en polyéthylène, ayant une épaisseur de 16 µm, un allongement de 200 %, sous une tension de 10 daN bobiné à 1 daN, tension après relaxation égale à 1,5 daN.

La présente invention s'applique à la réalisation de films de suremballage sur charges palettisées ou non en vue d'une pose manuelle ou mécanisée. On peut par exemple mettre en oeuvre un appareil de pose manuelle de film décrit dans la Demande de Brevet N° 95 05645, une machine de banderolage hélicoïdal à plateau porte-charge tournant ou une machine à charge fixe et à anneau tournant.

## Revendications

1. Film de suremballage ayant subi un étirage sous une tension comprise entre 10 et 20N/mm² par mètre de laize, un bobinage et une relaxation sur un mandrin ou une bobine de réception (38) sous une tension mécanique comprise entre 10 et 90 % de la tension d'étirage, **caractérisé en ce qu'**après l'opération d'étirage et avant le relâchement, il a subi une relaxation partielle à la tension d'étirage pendant une durée comprise entre 0,1 et 10 s.

2. Film selon la revendication 1, **caractérisé en ce qu'**il a subi un bobinage et une relaxation sous une tension mécanique comprise entre 10 % et 50 % de la tension d'étirage.

3. Bobine de film, **caractérisée en ce qu'**elle comporte, enroulé sur un moyeu en carton, un film selon la revendication 1 ou 2.

4. Bobine de film, **caractérisée en ce qu'**elle comporte, enroulé sur un moyeu en matière plastique, un film selon la revendication 1 ou 2.

5. Machine d'étirage de film comportant des moyens d'étirage (33, 34) d'un film étirable (36), des moyens de guidage (40, 41, 42, 57,35) de film et des moyens (45, 35, 37) de bobinage de film (36) étiré sur une bobine (38) de stockage, **caractérisée en ce qu'**elle comporte des moyens de guidage permettant une relaxation partielle à la tension d'étirage d'une durée comprise entre 0,1 et 10 s suivis par des moyens (42, 35) pour relâcher partiellement la tension mécanique dans le film après l'étirage et la relaxation partielle à la tension d'étirage et avant son bobinage sur la bobine de stockage.

6. Machine selon la revendication 5, **caractérisée en ce que** les moyens d'étirage (33, 34) et les moyens pour relâcher partiellement la tension mécanique comportent des rouleaux motorisés (33, 34, 35) et **en ce que** la variation des vitesses périphériques des rouleaux de sortie (34) des moyens d'étirage par rapport à celle du rouleau (35) des moyens pour relâcher partiellement la tension mécanique dans le film est comprise entre 10 % et 90 %, de préférence entre 10 % et 50 %.

7. Machine selon la revendication 5 ou 6, **caractérisée en ce qu'**elle comporte des moyens (44) pour faire varier le rapport des vitesses périphériques des rouleaux de sortie (34) des moyens d'étirage par rapport à celle du rouleau (35) des moyens pour relâcher partiellement la tension mécanique dans le film.

8. Procédé de suremballage d'un film étiré autour d'une charge, notamment palettisée, ledit procédé comprenant les étapes suivantes:
a) étirer le film sous une tension comprise entre 10 et 20 N/mm² par mètre de laize,
b) guider le film,
c) bobiner et relaxer le film sur un mandrin ou une bobine de réception sous une tension mécanique comprise entre 10 % et 90 % de la tension d'étirage,
**caractérisé en ce que**, àvant son bobinage et après son étirage, le film subit une relaxation partielle à la tension d'étirage d'une durée comprise entre 0,1 et 10 secondes.

9. Procédé selon la revendication 8, **caractérisé en ce que** le film est déposé sur la charge sous une tension inférieure à la moitié de la tension d'étirage du film.

## Patentansprüche

1. Verpackungsfolie, die einem Streckziehen unter einer Spannung zwischen 10 und 20 N/mm² pro Meter Maschinenbreite, einem Aufwickeln und einer Relaxation auf einem Dorn oder einer Aufnahmespule (38) unter einer mechanischen Spannung zwischen 10 und 90 % der Streckziehspannung unterzogen wurde,
**dadurch gekennzeichnet, dass** sie nach dem Streckziehverfahren und vor der Entspannung einer Teilrelaxation unter der Streckziehspannung während einer Dauer von 0,1 bis 10 s unterzogen wurde.

2. Folie nach Anspruch 1, **dadurch gekennzeichnet, dass** sie einem Aufwickeln und einer Relaxation unter einer mechanischen Spannung zwischen 10 und 50 % der Streckziehspannung unterzogen wurde.

3. Folienspule, **dadurch gekennzeichnet, dass** sie auf einer Kartonnabe aufgewickelt eine Folie nach Anspruch 1 oder 2 umfasst.

4. Folienspule, **dadurch gekennzeichnet, dass** sie auf einer Kunststoffnabe aufgewickelt eine Folie nach Anspruch 1 oder 2 umfasst.

5. Maschine zum Folienstreckziehen, umfassend Streckziehmittel (33, 34) für eine dehnbare Folie (36), Führungsmittel (40, 41, 42, 57, 35) für die Folie und Mittel (45, 35, 37) zum Aufwickeln der gezogenen Folie (36) auf eine Lagerspule (38), **dadurch gekennzeichnet, dass** sie Führungsmittel umfasst, die eine Teilrelaxation unter der Streckziehspannung über eine Dauer zwischen 0,1 und 10 s ermöglichen, gefolgt von Mitteln (42, 35) zum teilweisen Lösen der mechanischen Spannung in der Folie nach dem Streckziehen und der Teilrelaxation unter der Streckziehspannung und vor ihrem Aufwickeln auf die Lagerspule.

6. Maschine nach Anspruch 5, **dadurch gekennzeichnet, dass** die Streckziehmittel (33, 34) und die Mittel zum teilweisen Lösen der mechanischen Spannung motorisierte Rollen (33, 34, 35) umfassen und dass die Änderung der Umfangsgeschwindigkeiten der Ausgangsrollen (34) der Streckziehmittel im Vergleich zu jener der Rolle (35) der Mittel zum teilweisen Lösen der mechanischen Spannung in der Folie zwischen 10 und 90 % und vorzugsweise zwischen 10 und 50 % beträgt.

7. Maschine nach Anspruch 5 oder 6, **dadurch gekennzeichnet, dass** sie Mittel (44), umfasst, um das Verhältnis der Umfangsgeschwindigkeiten der Ausgangsrollen (34) der Streckziehmittel in bezug auf jene der Rolle (35) der Mittel zum teilweisen Lösen dar mechanischen Spannung in der Folie zu verändern.

8. Verfahren zum Umwickeln einer gezogenen Folie um eine Ladegut herum, insbesondere um palettisiertes Ladegut, wobei das Verfahren die folgenden Schritte umfasst:
a) Streckziehen der Folie unter einer Spannung zwischen 10 und 20 N/mm² pro Meter Maschinenbreite,
b) Führen der Folie,
c) Aufwickeln und Relaxation der Folie auf einem Dorn oder einer Aufnahmespule unter einer mechanischen Spannung zwischen 10 und 90 % der Streckziehspannung,
**dadurch gekennzeichnet, dass** vor ihrem Aufwickeln und nach ihrem Strackziehen die Folie einer Teilrelaxation unter der Streckziehspannung während einer Dauer zwischen 0,1 und 10 Sekunden unterzogen wird.

9. Verfahren nach Anspruch 8, **dadurch gekennzeichnet, dass** die Folie auf das Ladegut unter einer Spannung kleiner als die Hälfte der Streckziehspannung der Folie aufgebracht wird.

## Claims

1. A wrapping film that is subjected to stretching under a tension lying in the range 10 N/mm² to 20 N/mm² per meter of width, to winding, and to relaxation on a take-up mandrel or reel (38) under tension lying in the range 10% to 90% of the stretching tension, the film being **characterized in that** after the stretching operation and before release, it has been subjected to partial relaxation at the stretching tension for a period of time lying in the range 0.1 s to 10s.

2. A film according to claim 1, **characterized in that** it is subjected to winding and relaxation under tension lying in the range 10% to 50% of the stretching tension.

3. A reel of film, **characterized in that** it comprises a card hub having film according to claim 1 or 2 wound thereon.

4. A film reel, **characterized in that** it comprises a plastics material hub having a film according to claim 1 or 2 wound thereon.

5. A film stretching machine including stretching means (33, 34) for stretching a stretchable film (36), guide means (40, 41, 42, 57, 35) for guiding the film, and winding means (45, 35, 37) for winding the stretched film (36) on a storage reel (38), the machine being **characterized in that** it includes guide means enabling partial relaxation at the stretching tension for a period of time lying in the range 0.1 s to 10 s followed by means (42, 35) for partially releasing the tension in the film after stretching and partial relaxation at the stretching tension and before winding onto the storage reel.

6. A machine according to claim 5, **characterized in that** the stretching means (33, 34) and the means for partially releasing tension comprise motor-driven rollers (33, 34, 35), and **in that** the different peripheral speeds of the output rollers (34) of the stretching means compared with the speed of the roller (35) of the means for partially releasing the tension in the film lies in the range 10% to 90%, and preferably in the range 10% to 50%.

7. A machine according to claim 5 or 6, **characterized in that** it includes means (44) for varying the ratio of the peripheral speeds of the outlet roller (34) of the stretching means compared with the speed of the roller (35) of the means for partially releasing the tension in the film.

8. An outer wrapping method for wrapping a stretched film around a load, in particular a palletized load, said method comprising the following steps:
a) stretching the film under a tension lying in the range 10 N/mm² to 20 N/mm² per meter of width;
b) guiding the film; and
c) winding and relaxing the film on a take-up mandrel or reel under tension lying in the range 10% to 90% of the stretching tension,
the method being **characterized in that** the film is subjected, before being wound and after having been stretched, to partial relaxation at the stretching tension for a period of time lying in the range 0.1 s to 10 s.

9. A method according to claim 8, **characterized in that** the film is deposited on the load under a tension that is less than half the stretching tension of the film.
